# EUROPÄISCHE PATENTSCHRIFT

(11) **EP 1 746 281 B1**
(45) Veröffentlichungstag und Bekanntmachung des Hinweises auf die Patenterteilung: **18.04.2012**
(21) Anmeldenummer: 06114402.8
(22) Anmeldetag: 23.05.2006
(51) Int. Cl.: F02M 63/02, F02M 59/36, F16K 31/06, F16K 27/02, F02M 51/00, F02M 63/00

(54) **Anordnung mit einem Magnetkreis mit radial orientierbarem Stecker**
Arrangement having a magnet circuit with a radial orientable connector
Arrangement avec un circuit magnétique avec un connecteur orientable radialement

(30) Priorität: 20.07.2005 DE 102005033871
(43) Veröffentlichungstag der Anmeldung: 24.01.2007
(73) Patentinhaber: ROBERT BOSCH GMBH, 70442 Stuttgart (DE)
(72) Erfinder: Braeuer, Christian, 4432, Ernsthofen (AT); Schardax, Johann, 4020, Linz (AT)

(56) Entgegenhaltungen:
- EP-A1- 1 270 930
- WO-A-03/100247
- DE-A1- 10 138 756
- DE-A1- 10 214 084
- DE-A1- 10 240 880
- DE-A1- 19 832 826
- US-A- 5 244 180
- US-A- 5 549 274

## Beschreibung

Die Erfindung betrifft eine Anordnung mit einem Magnetkreis mit einem radial orientierbaren Steckerkontakt, beispielsweise ist dies eine Anordnung in einem elektromagnetischen Druckregelventil, welches über ein Tastverhältnis der Stromversorgung verstellt wird. Derartige Druckregelventile werden zur Druckregelung in Speichereinspritzsystemen eingesetzt. Diese Einspritzsysteme umfassen einen Hochdruckspeicherraum, der über eine Hochdruckpumpe mit unter hohem Druck stehenden Kraftstoff versorgt wird. Hierbei ist eine Druckregelung umfasst, d.h. ein an dem Hochdruckspeicherraum jeweils axial angeordneter Drucksensor und ein elektromagnetisches Druckregelventil, wodurch der Druck in dem Hochdruckspeicherraum schnell und präzise eingestellt wird, so dass ein konstanter Systemdruck bei unterschiedlichen Volumenströmen möglich ist.

### Stand der Technik

Durch die EP-A1-1 270 930 ist eine Anordnung mit einem Magnetkreis eines Magnetventils bekannt, die eine vormontierte Einheit aufweist. Diese vormontierte Einheit umfasst eine Magnetspule, eine Zwischenscheibe und einen Abschlußdeckel mit einem integrierten elektrischen Anschluß, die drehfest miteinander verbunden sind. Die vormontierte Einheit ist mit einer Gehäuseeinheit verbunden.

Häufig kann bei derartigen Anordnungen mit einem Magnetkreis aus Platzgründen der Steckerkontakt für einen elektrischen Anschluss nicht axial ausgeführt werden, sondern der Steckerkontakt ist in radialer Richtung orientiert, wobei eine Endposition behaftet mit einer bestimmten Winkeltoleranz eingestellt wird. Eine exakte Winkelorientierung eines Steckerkontaktes ist häufig nicht möglich. Insbesondere stehen für derartige Anordnungen mit einem Magnetkreis nur ein äußerst begrenzter Bauraum zur Verfügung. Daraus ergibt sich einerseits die Notwendigkeit einer kompakten Anordnung, woraus sich andererseits hohe Anforderungen an die Fertigungstoleranzen sowie aufwendige Geometrien der umfassten Bauteile ergeben, die die Kosten ungünstig beeinflussen.

Herkömmlicherweise erfolgt die Verbindung eines elektrischen Anschlusses mit einer Gehäusekomponente, in der eine Magnetspule integriert ist, mittels einer Flanschverbindung, einer Überwurfmutter, einer Gewindeverbindung, wobei an beiden Bauteilen im Winkel orientierte Gewinde vorgesehen sind, oder über Schleifkontakte zwischen Magnetspule und elektrischem Anschluss. Dadurch soll eine bestimmte Winkelausrichtung eines in dem elektrischen Anschluss umfassten Steckerkontaktes im montierten Zustand der Anordnung an seinem Bestimmungsort erreicht werden.

Daraus erwachsen die Nachteile, dass zusätzliche Bauteile erforderlich sind, beispielsweise eine Überwurfmutter. Darüberhinaus muß ein entsprechend grösserer Bauraum bereitgestellt werden, wenn beispielsweise die Verbindung eines elektrischen Anschlusses mit einer Gehäusekomponente durch eine Flanschverbindung realisiert wird. Ebenso müssen enge Fertigungstoleranzen der einzelnen Bauteile eingehalten werden, um eine entsprechende Winkelorientierung des elektrischen Anschlusses zu erzielen. Dies führt zu einer kostenintensiven Anordnung, bei der die einzelnen Komponenten insgesamt oder auch nur in einzelnen Bereichen mit engen Fertigungstoleranzen behaftetet sind und/oder entsprechend eine aufwendige Bauteilgeometrie aufweisen.

Aus DE-A-102 14 084 ist ein einstellbares Druckregelventil mit einem elektrischen Anschluss für Kraftstoffeinspritzsysteme bekannt, welches einem Hochdruckförderaggregat zugeordnet ist, das zwischen einer Hochdruckseite und einer Niederdruckseite angeordnet ist und ein Ventilelement umfasst, das über einen elektrischen Steller ansteuerbar ist. Hierbei ist der elektrische Steller als elektromagnetischer Steller ausgebildet. Das Druckregelventil weist einen elektrischen Anschluss auf, der mit einer Gehäusekomponente über eine Schraubverbindung verbunden ist. In der Gehäusekomponente ist eine Ankerplatte aufgenommen, die einerseits von einer Druckfeder beaufschlagt und andererseits einem ebenfalls in der Gehäusekomponente angeordneten Elektromagneten gegenüberliegt. Die Gehäusekomponente des Druckregelventils weist einen verformbaren Bereich auf, über den bei Montage des Druckregelventils an einem Aufnahmekörper ein Spalt zwischen den Flächen der elektrisch ansteuerbaren Stelleranordnung des Magnetsystems Ankerplatte/Magnetkern eingestellt werden kann. Hierbei erfolgt die Orientierung des elektrischen Anschlusses über ein an beiden Bauteilen orientierendes Gewinde, wodurch keine engen Winkeltoleranzen eingehalten werden können.

### Vorteile der Erfindung

Aufgabe der vorliegenden Erfindung ist es, eine Anordnung mit einem Magnetkreis bereitzustellen, an der ein elektrischer Anschluss in Form eines Steckerkontaktes mit einer radial orientierbaren Ausrichtung vorgesehen ist. Eine radiale Winkelausrichtung des integrierten Steckerkontaktes der erfindungsgemäß vorgeschlagenen Anordnung mit einem Magnetkreis, die eine vormontierte Einheit und eine diese Einheit aufnehmende Gehäusekomponente umfasst, ist nach dem Einbau der gesamten Anordnung mit einem Magnetkreis in einen Aufnahmekörper in einem engen Winkeltoleranzbereich möglich. Die Anordnung mit einem Magnetkreis kommt ohne zusätzliche Bauteile, insbesondere Überwurfmutter oder Flanschverbindung, aus und bietet demnach eine kostengünstige und einfach umzusetzende Lösung. Enge Fertigungstoleranzen und aufwendige Geometrien der einzelnen Bauteile sind nicht notwendig, um eine den Anforderungen entsprechende radiale Ausrichtung des Steckerkontaktes nach dem Einbau der Anordnung mit einem Magnetkreis zu erzielen.

Es wird eine Anordnung mit einem Magnetkreis vorgeschlagen, an dem ein elektrischer Anschluss in Form eines Steckerkontaktes mit einer radial orientierbaren Ausrichtung vorgesehen ist. Die Anordnung mit einem Magnetkreis umfasst eine vormontierte Einheit, welche eine Magnetspule, mindestens eine Zwischenscheibe und einen Abschlussdeckel mit einem integrierten elektrischen Anschluss zusammenfasst. Diese Komponenten sind in einer zueinander beliebigen oder bezogen auf eine Bezugsfläche orientierbaren Position drehfest miteinander verbunden. Die drehfeste Verbindung der einzelnen Komponenten kann durch Reib- und/oder Formschluß erfolgen. Diese vormontierte Einheit ist in einer Gehäusekomponente aufgenommen, wodurch die vorgeschlagene Anordnung mit einem Magnetkreis bereitgestellt wird, dessen elektrischer Anschluss einen radial orientierbaren Steckerkontakt aufweist. Die Anordnung mit einem Magnetkreis ist durch eine axiale Verschraubung in einen Aufnahmekörper aufgenommen. Nachdem die Anordnung mit einem Magnetkreis in dem Aufnahmekörper aufgenommen ist, kann die endgültige radiale Ausrichtung des Steckerkontaktes des elektrischen Anschlusses in die gewünschte Winkelendposition erfolgen. Dabei wird die gesamte vormontierte Einheit, bestehend aus Magnetspule, Zwischenscheibe und Abschlussdeckel mit integriertem elektrischen Anschluss, durch Aufbringen eines bestimmten Mindestdrehmomentes in die gewünschte Winkelendposition gebracht. Die Winkelendposition ist mit großer Exaktheit, d.h. behaftet mit einem engen Winkeltoleranzbereich, einstellbar. Die eingestellte Winkelendposition kann durch Reibschluß gesichert werden. Alternativ kann auch durch einen nachträglichen Fertigungsschritt, z.B. durch Verkerbung, die Winkelendposition formschlüssig gesichert werden.

Der Vorteil der erfindungsgemäß vorgeschlagenen Lösung ist vor allem darin zu sehen, dass mit möglichst wenig Bauteilen, die in einfachen Fertigungsprozessen hergestellt werden, eine beliebige radiale Winkelausrichtung eines Steckerkontaktes eines elektrischen Anschlusses, integriert in eine eine Magnetkomponente aufweisende Anordnung erzielt werden kann. Ist die erfindungsgemäße Anordnung mit einem Magnetkreis beispielsweise Bestandteil eines Druckregelventils, folgt daraus, dass bei der Montage eines derartigen Druckregelventils an einer Hochdruckpumpe oder an einem Hochdruckspeicherraum der umfasste elektrische Anschluss in einer mit einer engen Winkeltoleranz behafteten radialen Orientierung ausgerichtet werden kann, wobei als Bezugsfläche das Bauteil selbst, mit dem die Anordnung mit einem Magnetkreis verbunden wird, d.h. die Hochdruckpumpe oder der Hochdruckspeicherraum, fungiert und die Ausrichtung nicht länger an Bezugsflächen wie beispielsweise eine Fläche eines Sechskants gebunden ist.

### Zeichnung

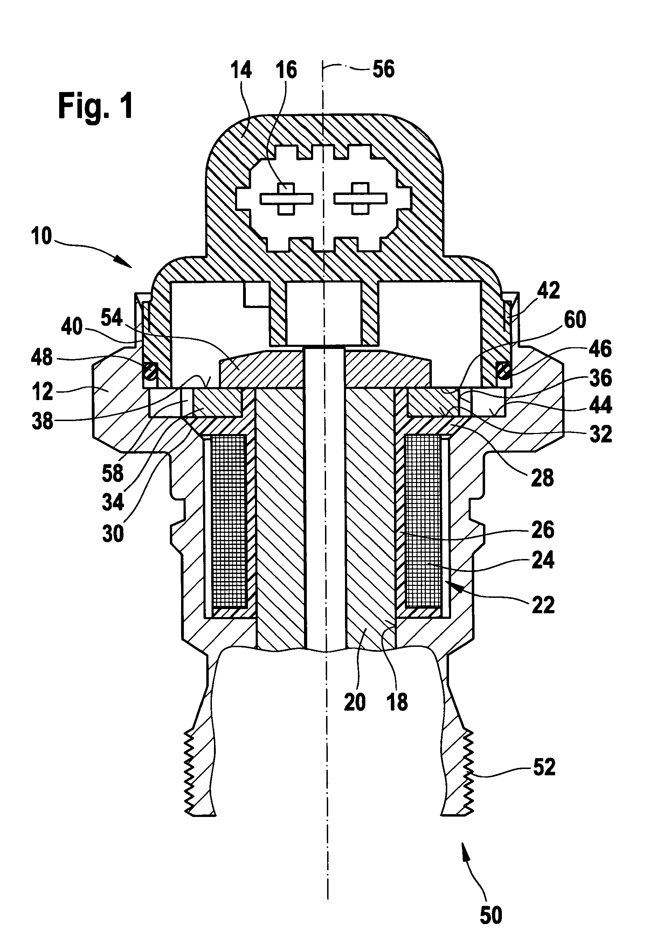

Ein Ausführungsbeispiel der Erfindung ist in der Zeichnung dargestellt und in der nachfolgenden Beschreibung näher erläutert, wobei
- Figur 1: eine Prinzipdarstellung einer erfindungsgemäßen Komponente mit einem Magentkreis im Schnitt zeigt.

### Ausführungsbeispiele

Die Anordnung mit einem Magnetkreis 10 weist eine Gehäusekomponente 12 und einen Abschlussdeckel 14 auf. Der Abschlussdeckel 14 weist einen elektrischen Anschluss 16 auf, wobei ein Steckerkontakt integriert ist, über welchen ein in der Anordnung mit einem Magnetkreis 10 integrierter elektrisch ansteuerbarer Steller aktiviert oder desaktiviert werden kann.

Der elektrische Steller ist in dem Ausführungsbeispiel als elektromagnetischer Steller ausgebildet, dessen Einzelheiten nicht weiter dargestellt sind. In der Gehäusekomponente 12 ist eine Bohrung 18 vorgesehen, in die eine Hülse 20 aufgenommen ist. Vorzugsweise kann das Gehäuse 12 und die Hülse 20 einstückig ausgeführt sein. Die Hülse 20 dient beispielsweise der Aufnahme eines nicht dargestellten Ankerteils. Die Hülse 20 wird teilweise umschlossen von einer vormontierten Magnetspule 22, welche eine Wicklungseinheit 24 und eine Umspritzung in Form einer Hülse 26 aus Kunststoff wie z.B. PPS umfasst. Die Magnetspule 22 umfasst eine kragenförmige Schulter 28, welche aus Montagegründen einen konisch zulaufenden Umfangsbereich 30 aufweist.

An einer Ringfläche 32 der kragenförmigen Schulter 28 der Magnetspule 22 liegt eine Zwischenscheibe 34 an, wobei an der Berührungsfläche zwischen Ringfläche 32 und der Zwischenscheibe 34 ein Form- und/oder Reibschluß besteht, der bei der Umspritzung gefertigt werden kann.

Die Zwischenscheibe 34 steht in einem Form- und/oder Reibschluß mit dem Abschlussdeckel 14. Beispielsweise kann im Falle eines Formschlusses die Verbindung zwischen einem Aussenumfang 36 der Zwischenscheibe 34 und einem Aufnahmebereich 58 des Abschlussdeckels 14 über eine Keil- oder Mehrkeilverbindung, einem Polygonprofil oder eine klauenförmige Verbindung erfolgen. Ebenso ist es möglich, dass eine Stirnfläche 38 der Zwischenscheibe 34 in Formschluss mit einem entsprechend ausgebildeten Bereich 60 des Abschlussdeckel 14 steht. Dadurch entsteht eine vormontierte Einheit, welche die Elemente Magnetspule 22, Zwischenscheibe 34 und Abschlussdeckel 14 drehfest miteinander verbindet. Vorzugsweise bietet ein entsprechend geformter Umfang 36 der Zwischenscheibe 34, d.h. beispielsweise Kerbzahn- oder Polygonprofil, eine kostengünstige Verbindung.

Darüberhinaus bietet die vormontierte Einheit, umfassend Magnetspule 22, Zwischenscheibe 34 und Abschlussdeckel 14, den Vorteil, dass die für einen elektromagnetischen Steller relevanten Elemente, d.h. Magnetkern, in dem die Magnetspulen eines Elektromagneten aufgenommen sind, und eine Ankerplatte 54, welche beispielsweise in dem Abschlussdeckel 14 aufgenommen ist, in eine vorbestimmte Position zueinander gebracht werden können, welche sich durch eine radiale Ausrichtung des elektrischen Anschlusses 16 nicht verändert. Dadurch kann die Qualität eines die erfindungsgemäße Anordnung mit einem Magnetkreis 10 enthaltenden Druckregelventils sicher gestellt werden.

Die vormontierte Einheit, umfassend Magnetspule 22, Zwischenscheibe 34 und Abschlussdeckel 14, wird in der Gehäusekomponente 12 aufgenommen. Hierfür ist der Umfang 40 des Abschlussdeckels 14 derart ausgebildet, dass der Abschlussdeckel 14 beispielsweise mittels einer Bördelung 42 oder alternativ mittels einer Überwurfmutter mit der Gehäusekomponente 12 verbindbar ist. Durch diese Verbindung wird der Abschlussdeckel 14 einschließlich der damit drehfest verbundenen Zwischenscheibe 34 und der Magnetspule 22 gegen eine Fläche 44 der Gehäusekomponente 12 gepresst. Desweiteren ist an dem Umfang 40 des Abschlussdeckels 14 eine Schulter 46 ausgebildet, an der ein Dichtring 48 anliegt, der den Abschlussdeckel 14 gegen die Gehäusekomponente 12 abdichtet.

Die Gehäusekomponente 12 umfasst an einem dem Abschlußdeckel 14 entgegengesetzten Ende 50 ein Außengewinde 52, welches in ein korrespondierendes Gewinde an einem ― nicht dargestellten ― Aufnahmekörper eingeschraubt werden kann.

Der Steckerkontakt 16 der Anordnung mit einem Magnetkreis 10, welche die vormontierte Einheit umfasst, in der Magnetspule 22, Zwischenscheibe 34 und Abschlußdeckel 14 drehfest miteinander verbunden sind, nimmt nach der Verschraubung mit dem Aufnahmekörper eine radiale Winkelposition an, welche von den Verschraubungsparametern des Aufnahmekörpers und der Gehäusekomponente 12 wie z.B. Gewindeorientierung abhängig ist. Die abschließende radiale Orientierung des Steckerkontaktes 16 erfolgt mit einem definierten Mindestdrehmoment in eine beliebige Winkelendposition. In diesem montierten Zustand kann die vormontierte Einheit um 360° um ihre Längsachse 56 gedreht werden. Durch die radiale Ausrichtung des elektrischen Steckerskontaktes 16 in dem montierten Zustand durch Aufbringen eines Mindestdrehmomentes, welches sich in seiner Höhe nach den herrschenden Paarungen der Form- und/oder Reibschlussverbindungen richtet, werden enge Winkeltoleranzen, die in einem Bereich von ± 5° liegen, erreicht. Im Gegensatz dazu können mit bisher bekannten Anordnungen über orientierende Gewinde herkömmlicherweise nur Toleranzen im Bereich von ± 20° erzielt werden.

Mit der erfindungsgemäß vorgeschlagenen Ausführung der Anordnung mit einem Magentkreis 10, welches einen elektrischen Anschluss in Form eines Steckerkontaktes 16 umfasst, lassen sich kostengünstige Bauteile mit relativ großen Fertigungstoleranzen verwenden. Die mit der erfindungsgemäßen Anordnung mit einem Magnetkreis 10 erreichbare radiale Orientierung des Steckerkontaktes 16 ist unabhängig von der Verschraubung der Anordnung mit einem Magnetkreis 10 mit einem Aufnahmekörper, so dass die radiale Orientierung des Steckerkontaktes 16, welche bezogen ist auf den Aufnahmekörper, in einer beliebigen Position möglich ist. Darüberhinaus birgt die Anordnung den Vorteil, dass die Winkelendposition mit einer sehr geringen Toleranz eingestellt werden kann. Der benötigte Bauraum ist äußerst gering, da zusätzliche, Platz beanspruchende Bauteile entfallen. Weitere Vorteile der erfindungsgemäßen Anordnung mit einem Magnetkreis 10 ergeben sich für die Funktionsweise des die Anordnung mit einem Magnetkreis 10 aufnehmenden Bauteils, beispielsweise ein Druckregelventils.

### Bezugszeichenliste

- 10: Anordnung mit einem Magnetkreis
- 12: Gehäusekomponente
- 14: Abschlussdeckel
- 16: Steckerkontakt
- 18: Bohrung
- 20: Hülse
- 22: Magnetspule
- 24: Wicklungseinheit
- 26: Umspritzte Hülse
- 28: Schulter
- 30: Umfang Schulter
- 32: Ringfläche
- 34: Zwischenscheibe
- 36: Umfang Zwischenscheibe
- 38: Stirnfläche Zwischenscheibe
- 40: Umfang Abschlussdeckel
- 42: Bördelung
- 44: Fläche der Gehäusekomponente
- 46: Schulter
- 48: Dichtring
- 50: Ende Gehäusekomponente
- 52: Außengewinde
- 54: Ankerplatte
- 56: Längsachse
- 58: Aufnahmebereich des Abschlussdeckelss
- 60: Bereich des Abschlussdeckels

## Patentansprüche

1. Anordnung mit einem Magnetkreis eines Magnetventils mit einer vormontierten Einheit, die eine Magnetspule (22), mindestens eine Zwischenscheibe (34) und einen Abschlussdeckel (14) mit einem integrierten elektrischen Anschluss miteinander drehfest verbindet, wobei die vormontierte Einheit mit einer Gehäusekomponente (12) verbunden ist, **dadurch gekennzeichnet, dass** die Gehäusekomponente (12) an einem dem Abschlussdeckel (14) entgegengesetzten Ende ein Außengewinde (52) umfasst, welches in ein korrespondierendes Gewinde an einem Aufnahmekörper einschraubbar ist, und dass die Gehäusekomponente (12) mit der vormontierten Einheit durch eine axiale Verschraubung im Aufnahmekörper aufgenommen ist.

2. Anordnung mit einem Magnetkreis nach Anspruch 1, **dadurch gekennzeichnet, dass** die Magnetspule (22), die mindestens eine Zwischenscheibe (34) und der Abschlussdeckel (14) mit dem integrierten elektrischen Anschluss über Form- und/oder Reibschluß miteinander drehfest verbunden sind.

3. Anordnung mit einem Magnetkreis nach einem der Ansprüche 1 bis 2, **dadurch gekennzeichnet, dass** die Zwischenscheibe (34) an ihrem Umfang (36) ein Profil aufweist, welches in Formschluß mit einem Aufnahmebereich (58) des Abschlussdeckels (14) mit dem integrierten elektrischen Anschluss steht.

4. Anordnung mit einem Magnetkreis nach einem der Ansprüche 1 bis 2, **dadurch gekennzeichnet, dass** die Zwischenscheibe (34) auf einer Stirnfläche (38) ein Profil aufweist, welches in Formschluß mit einem entsprechenden Bereich (60) des Abschlussdeckels (14) mit dem integrierten elektrischen Anschluss steht.

5. Anordnung mit einem Magnetkreis nach Anspruch 1, **dadurch gekennzeichnet, dass** die vormontierte Einheit mittels einer Bördelung (42) mit der Gehäusekomponente (12) verbunden ist.

6. Anordnung mit einem Magnetkreis nach Anspruch 1, **dadurch gekennzeichnet, dass** die vormontierte Einheit mittels einer Überwurfmutter mit der Gehäusekomponente (12) verbunden ist.

7. Verfahren zur radialen Ausrichtung eines Steckerkontaktes (16) einer Anordnung mit einem Magnetkreis (10) nach einem der Ansprüche 1 bis 6, **dadurch gekennzeichnet, dass** die Schritte umfasst sind:
- Verbinden der Magnetspule (22), der mindestens einen Zwischenscheibe (34) und des Abschlussdeckels (14) mit einem integrierten elektrischen Anschluss zu einer drehfest vormontierten Einheit;
- Verbinden der vormontierten Einheit mit einer Gehäusekomponente (12) zu der Anordnung mit einem Magnetkreis (10);
- Verbinden der Anordnung mit einem Magnetkreis (10) mit einem Aufnahmekörper;
- Radiale Ausrichtung des Steckerkontaktes (16) des elektrischen Anschlusses, bezogen auf den Aufnahmekörper, durch das Aufbringen eines Drehmomentes auf die vormontierte Einheit durch Verdrehung bis zu einer definierten Winkelendposition des Steckerkontakts (16).

## Claims

1. Arrangement having a magnetic circuit of a solenoid valve having a premounted unit which connects a solenoid coil (22), at least one intermediate disc (34) and a closure cover (14) having an integrated electrical connection to one another in a rotationally fixed manner, with the premounted unit being connected to a housing component (12), **characterized in that** the housing component (12) comprises an external thread (52) at an end which is opposite the closure cover (14), it being possible for the said external thread to be screwed into a corresponding thread on an accommodation body, and **in that** the housing component (12) having the premounted unit is held in the accommodation body by axial screwing.

2. Arrangement having a magnetic circuit according to Claim 1, **characterized in that** the solenoid coil (22), the at least one intermediate disc (34) and the closure cover (14) having the integrated electrical connection are connected to one another in a rotationally fixed manner by means of an interlocking and/or frictional connection.

3. Arrangement having a magnetic circuit according to either of Claims 1 and 2, **characterized in that** the intermediate disc (34) has a profile over its circumference (36), the said profile forming an interlocking connection with an accommodation region (58) of the closure cover (14) having the integrated electrical connection.

4. Arrangement having a magnetic circuit according to either of Claims 1 and 2, **characterized in that** the intermediate disc (34) has a profile at an end face (38), the said profile forming an interlocking connection with a corresponding region (60) of the closure cover (14) having the integrated electrical connection.

5. Arrangement having a magnetic circuit according to Claim 1, **characterized in that** the premounted unit is connected to the housing component (12) by means of a border (42).

6. Arrangement having a magnetic circuit according to Claim 1, **characterized in that** the premounted unit is connected to the housing component (12) by means of a union nut.

7. Method for radially orienting a plug contact (16) of an arrangement having a magnetic circuit (10) according to one of Claims 1 to 6, **characterized in that** the said method comprises the following steps:
- connecting the solenoid coil (22), the at least one intermediate disc (34) and the closure cover (14) having an integrated electrical connection to form a unit which is premounted in a rotationally fixed manner;
- connecting the premounted unit to a housing component (12) to form the arrangement having a magnetic circuit (10);
- connecting the arrangement having a magnetic circuit (10) to an accommodation body;
- radially orienting the plug contact (16) of the electrical connection, in relation to the accommodation body, by applying a torque to the premounted unit by rotation up to a defined angular end position of the plug contact (16).

## Revendications

1. Agencement comprenant un circuit magnétique d'une électrovanne, comprenant une unité prémontée, qui relie ensemble de manière solidaire en rotation une bobine magnétique (22), au moins un disque intermédiaire (34) et un couvercle de terminaison (14) avec un raccord électrique intégré, l'unité prémontée étant connectée à un composant de boîtier (12), **caractérisé en ce que** le composant de boîtier (12) comprend, à une extrémité opposée au couvercle de terminaison (14), un filetage extérieur (52) qui peut être vissé dans un filetage correspondant sur un corps de logement, et **en ce que** le composant de boîtier (12) est reçu avec l'unité prémontée par un vissage axial dans le corps de logement.

2. Agencement comprenant un circuit magnétique selon la revendication 1, **caractérisé en ce que** la bobine magnétique (22), l'au moins un disque intermédiaire (34) et le couvercle de terminaison (14) avec le raccord électrique intégré sont connectés ensemble de manière solidaire en rotation par engagement par correspondance géométrique et/ou par friction.

3. Agencement comprenant un circuit magnétique selon l'une quelconque des revendications 1 à 2, **caractérisé en ce que** le disque intermédiaire (34) présente sur sa périphérie (36) un profil en engagement par correspondance géométrique avec une région de réception (58) du couvercle de terminaison (14) avec le raccord électrique intégré.

4. Agencement comprenant un circuit magnétique selon l'une quelconque des revendications 1 à 2, **caractérisé en ce que** le disque intermédiaire (34) présente sur une surface frontale (38) un profil qui est en engagement par correspondance géométrique avec une région correspondante (60) du couvercle de terminaison (14) avec le raccord électrique intégré.

5. Agencement comprenant un circuit magnétique selon la revendication 1, **caractérisé en ce que** l'unité prémontée est connectée au moyen d'une bordure (42) au composant de boîtier (12).

6. Agencement comprenant un circuit magnétique selon la revendication 1, **caractérisé en ce que** l'unité prémontée est connectée au moyen d'un écrou d'accouplement au composant de boîtier (12).

7. Procédé pour l'orientation radiale d'un contact de commande (16) d'un agencement comprenant un circuit magnétique (10) selon l'une quelconque des revendications 1 à 6, **caractérisé en ce qu'**il comprend les étapes suivantes :
- connexion de la bobine magnétique (22), de l'au moins un disque intermédiaire (34) et du couvercle de terminaison (14) avec un raccord électrique intégré pour former une unité prémontée fixée en rotation ;
- connexion de l'unité prémontée à un composant de boîtier (12) pour obtenir l'agencement comprenant un circuit magnétique (10) ;
- connexion de l'agencement comprenant un circuit magnétique (10) à un corps de logement ;
- orientation radiale du contact d'enfichage (16) du raccord électrique, par rapport au corps de logement, par l'application d'un couple à l'unité prémontée par rotation jusqu'à une position d'extrémité angulaire définie du contact d'enfichage (16).
